# EUROPEAN PATENT APPLICATION

(11) **EP 1 074 776 A1**
(43) Date of publication of application: **07.02.2001**
(21) Application number: 00113218.2
(22) Date of filing: 21.06.2000
(51) Int. Cl.: F16L 5/10, H02G 3/22

(54) **Cable gland and/or pipe gland.**

(30) Priority: 06.08.1999 IT GE990028 U
(71) Applicant: BOCCHIOTTI SOCIETA'PER L'INDUSTRIA ELETTROTECNICA S.P.A., I-16121 Genova (IT)
(72) Inventor: Messeri, Massimo, 16121 Genova (IT)
(74) Representative: Porsia, Attilio, Dr.

(57) **Abstract**

Cable gland and/or pipe gland for connector or component boxes, consisting of sealing means (2) and support and protection means (1) for the cable, the latter being coupled with said sealing means, both said means being located on a hole made onto a wall of said box; said support and protection means for the cable consist of a plurality of stiff elements (201), substantially ring-shaped and overlapping, tapered towards the outside of the wall of said box, and having a section decreasing in the same direction, connected one to the other by means of two or more connecting strips (401); said sealing means consist of a plurality of flexible sealing elements (102), substantially ring-shaped, each of them being coupled with the inner rim of the corresponding support element (201), tapered in the opposite direction, the different elements being connected one to the other by means of two or more connecting strips (132).

## Description

The present invention relates to a cable gland and/or pipe gland, in particular for connector boxes and/or component boxes for electrical systems.

It is known about cable glands and/or pipe glands consisting of rubber diaphragms or other flexible materials introduced into the holes of component and/or connector boxes, in particular those used for outside electrical systems, in which it is strongly necessary to ensure a sealing action exerted onto the cable going into the box. Some among these devices are substantially in the shape of a frustum of cone, divided into several layers which are perpendicular to the hole axis of said box, so that it is possible to obtain each time the hole having a suitable size for the cable or pipe used.

Devices of this kind show some drawbacks. First of all, the flexible material such device is made of is subject to ageing due to its exposition to atmospheric agents, which reduces its sealing capacity exerted onto the pipe or cable introduced into it. Moreover, the cut which is made between the different areas in order to carry out the hole into which the cable or pipe has to be introduced is often difficult to carry out with enough precision because of the compliance of the material. It should also be said that the structure in the shape of frustum of cone, though ensuring on the one hand good performances as far as the cable support and the sealing action are concerned, on the other hand shows axial overall dimensions which can often hinder some arrangements of the boxes used in a system.

The present invention, therefore, aims at providing a cable gland and/or pipe gland in which the cutting allowing the opening of the hole for the introduction of the pipe or cable is made easier, in which the resistance to atmospheric agents is improved and in which the overall dimensions along the hole axis can be reduced.

The object of the present invention, therefore, is a cable gland and/or pipe gland for connector or component boxes, consisting of sealing means, and support and protection means for the cable, the latter being coupled with said sealing means, said means being located on a hole made onto a wall of said box, characterized in that said support and protection means for the cable consist of a plurality of stiff elements, substantially ring-shaped and overlapping, tapered towards the outside of the wall of said box, and having a section decreasing in the same direction, connected one to the other by means of two or more connection strips, and in that said sealing elements consist of a plurality of flexible sealing elements, substantially ring-shaped, each of them being coupled with the inner rim of the corresponding support element, tapered in the opposite direction, the different elements being connected one to the other by means of two or more connecting strips.

Advantageously, outside the ring-shaped support element having the smaller section a closing plane is arranged, said plane being connected to said support element by means of two or more connecting strips. Similarly, on the wall of said box the support element having the larger section is connected to a ring-shaped plate by means of two or more connecting strips.

In such a way it is possible to obtain a better sealing action towards water, because a more suitable material is used, since there are no "structural" obligations.

Further advantages and characteristics of the device according to the present invention will be evident from the following detailed description of a form of embodiment of said invention, carried out as a mere non-limiting example, with reference to the enclosed drawings, in which:
Fig. 1 is a perspective view of a form of embodiment of the device according to the present invention;
Fig. 2 is an elevation view with sectioned portions of the device in fig. 1 introduced into a hole of a wall of a connector or component box;
Fig. 3 is a section view of the device of the invention with a cable introduced into it; and
Fig. 4 is a section view of the device of the invention with a cable introduced into it, in a different arrangement from the one shown in fig. 3.

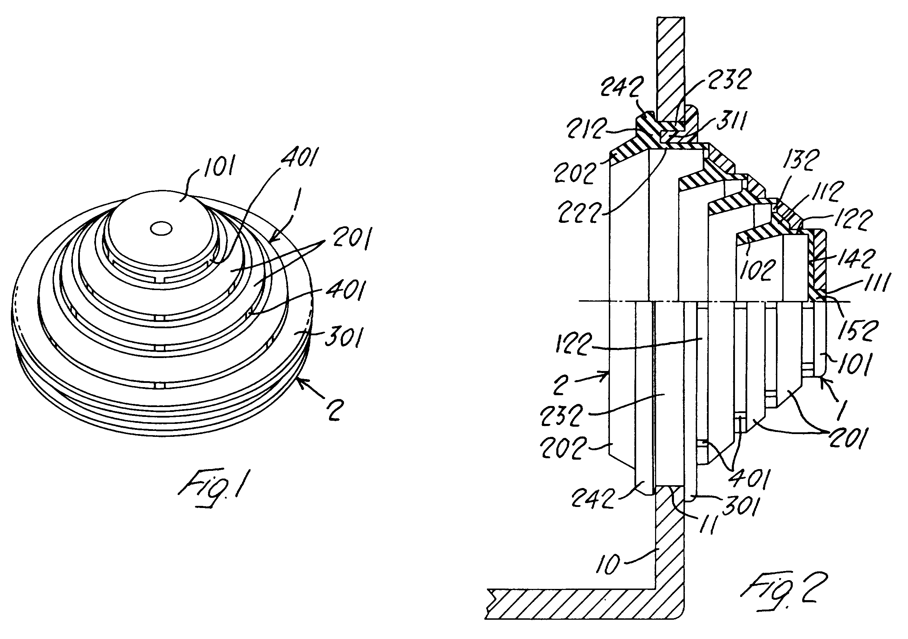

Fig. 1 shows the device of the present invention; the numeral 1 indicated the support and protection means of said device. Said means consist of the ring-shaped elements 201, tapered and connected one to the other by means of the strips 401. Above the element 201 having the smaller section the closing plane 101 is located, the latter being also connected to the element 201 below by means of the strips 401. Below the element 201 having the larger section the plate 301 is placed, said plate being connected to said element 201 by means of the strips 401. The numeral 2 generally indicates the sealing means of the device, described and shown with more details later on.

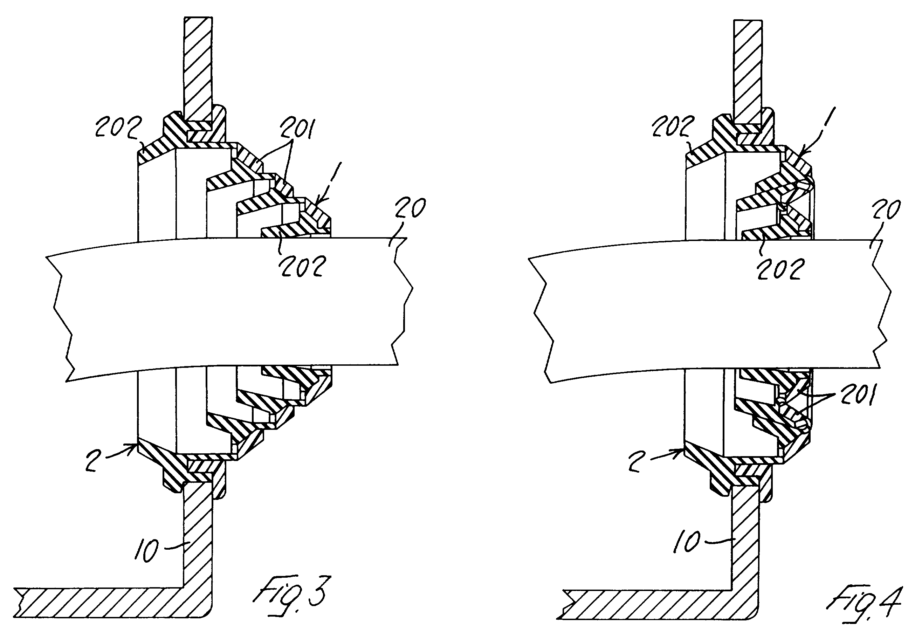

Fig. 2 shows the device of the invention partially sectioned, introduced into the hole 11 made into the wall 10 of a connector box. As can be observed from the figure, the sealing means 2 consist of a plurality of ring-shaped sealing elements 102, connected with their wall 112 to the lower inner rim of the corresponding support elements 201, and tapered in the opposite direction with respect to the latter. Each element 102 also shows a cylindrical wall 122 which fills the space between two consecutive support elements 201. The sealing elements 102 are connected one to the other by means of the strips 132. The element 102 connected to the support element 201 having the smaller section is connected on its upper end, by means of the strips 142, to the extension 152, the latter being introduced into the axial hole 111 of the closing plane 101. The sealing element 202 is connected on the opposite end of the device, that is to say, on the ring-shaped plate 301, provided with a cylindrical flange 311. Said sealing element, beside showing its cylindrical wall 222 analogous to the wall of the sealing elements 102 described above, shows on its outer surface the groove 232 and the bulge 242 for the cooperation with the rim of the hole 11 of the wall 10 of the connector box.

Fig. 3 shows a section view of the device of the invention with a cable 20 introduced into it. As can be seen, the removal of the closing plane 101 has allowed in this case the introduction of the cable 20, and the sealing action is ensured by the first sealing element 102 coming into contact with the outer surface of the cable 20. The support is also ensured by the whole structure of the device.

In fig. 4 the device is arranged so as to occupy a very small axial space. The support elements which are not connected to the cable are moved into the support element 201 connected to the ring-shaped plate 301, thus creating an extremely compact structure.

The working of the device according to the present invention will be evident from the following. As can be inferred from figures 3 and 4, the device according to the present invention is suited to the kind of cable or pipe which has to be introduced into it. To that purpose a cutting tool, such as a cutter or a pair of scissors, can be used to separate the elements of the device which are not useful in the present situation. The blade is introduced below the element which has to be separated from the device, and the cutting operation is carried out very easily, since on the one hand the material which is in between the two support elements 201, and also between the plane 101 and the elements 201 below, is the flexible material of the cylindrical wall 122, and on the other hand the cutting operation is guided by means of the stiff surfaces of said support elements. In practice, the only resistance to the cutting is exerted by the connecting strips 401 between the different support elements 201, whose dimensions are besides so limited to allow an easy cutting.

The sealing action is thus exerted onto the cable 20 introduced into the device by the sealing element 102 corresponding to the support element 201 having a suitable section for the given cable. Moreover, it is evident from figure 4 that, thanks to the elasticity given to the device by the cylindrical walls 122, the support elements, though stiff, can be arranged as shown, thus allowing a relevant reduction in the axial overall dimensions of the device.

The device can be advantageously carried out by successive molding of the two materials one onto the other; for instance, the housing for the support elements will be molded first, and then the molding of the sealing means can be carried out onto said housing. Obviously, a similar result can be obtained by molding the two parts separately and then joining them with suitable means such as adhesive or the like.

The cable gland and/or pipe gland according to the present invention, therefore, brilliantly solves the problems arising from the adaptation to the different sections of cables or pipes to be introduced, and the problems of the sealing protection and the supporting of the introduced cable.

## Claims

1. Cable gland and/or pipe gland for connector or component boxes, consisting of sealing means (2) and support and protection means (1) for the cable, being coupled with said sealing means, both said means being located on a hole made onto a wall of said box, characterized in that said support and protection means for the cable consist of a plurality of stiff elements (201), substantially ring-shaped and overlapping, tapered towards the outside of the wall of said box, and having a section decreasing in the same direction, connected one to the other by means of two or more connecting strips (401), and in that said sealing means consist of a plurality of flexible sealing elements (102), substantially ring-shaped, each of them being coupled with the inner rim of the corresponding support element (201), tapered in the opposite direction, the different elements being connected one to the other by means of two or more connecting strips (132).

2. Device according to claim 1, characterized in that outside the ring-shaped support element (201) having the smaller section a closing plane (101) is located, said plane being connected to said support element by means of two or more connecting strips (401).

3. Device according to claim 1 or 2, characterized in that on the wall (10) of said box the support element (201) having the larger section is connected to a ring-shaped plate (301) by means of two or more connecting strips (401).

4. Device according to claim 3, in which said ring-shaped plate is connected to a sealing element (202) provided on its outer side wall with a groove (232) and a bulge (242) for the cooperation with the rim of the hole (11) of the wall (10) of said box.

5. Device according any of the claims 1 to 4, in which each of said sealing elements (102) is provided with a cylindrical wall (122) extending as far as the support element (201) above the one to which said sealing element (102) is connected.

6. Device according any of the preceding claims, in which said support elements (201, 101, 301) are made of a plastic material and are obtained as one piece one with the other by molding, said sealing elements (102, 202) being made of an elastomeric material, being also obtained as one piece one with the other by molding, and being molded directly onto the assembly of said support elements (201, 101, 301).
